# EUROPÄISCHE PATENTANMELDUNG

(11) **EP 1 818 287 A1**
(43) Veröffentlichungstag der Anmeldung: **15.08.2007**
(21) Anmeldenummer: 07000216.7
(22) Anmeldetag: 08.01.2007
(51) Int. Cl.: B65G 13/02

(54) **Rollenbahnförderer**

(30) Priorität: 08.02.2006 DE 102006005978
(71) Anmelder: EISENMANN Anlagenbau GmbH & Co. KG, 71032 Böblingen (DE)
(72) Erfinder: Swoboda, Werner, 71032 Böblingen (DE)
(74) Vertreter: Ostertag, Ulrich

(57) **Zusammenfassung**

Ein Rollenbahnförderer (1) umfasst in an und für sich bekannter Weise eine Vielzahl von in zwei parallelen Spuren angeordneten angetriebenen Rollen (14). Jeder angetriebenenen Rolle (14) ist ein Antriebsmotor zugeordnet. Aus einer ersten Spannungsquelle (20a) wird ein erster Satz der angetriebenen Rollen (14) gespeist, wobei eine zweite Spannungsquelle (20b) vorgesehen ist, aus welcher ein weiterer Satz der angetriebenen Rollen (14) gespeist wird. Diese Anordnung bietet eine hohe Redundanz bei Ausfall einzelner Komponenten des Rollenantriebes, so daß in einem solchen Falle ein Notbetrieb gewährleistet ist.

## Beschreibung

Die Erfindung betrifft einen Rollenbahnförderer mit
a) einer Vielzahl von in zwei parallelen Spuren angeordneten angetriebenen Rollen;
b) einer Vielzahl von Antriebsmotoren zum Antreiben der Rollen;
c) mindestens einer Spannungsquelle, aus welcher die Antriebsmotoren gespeist werden.
   Rollenbahnförderer werden zum Transport von Warenträgern wie z. B. Paletten eingesetzt. In der Automobilindustrie werden mit ihnen häufig Fahrzeugkarosserien oder Teile von Fahrzeugkarosserien zwischen einzelnen Bearbeitungsstationen transportiert. Die Fahrzeugkarosserien sind dabei auf sog. "Skids" befestigt. Damit werden Transportgestelle bezeichnet, die zwei zu einander parallele Skidkufen aufweisen. Die Skidkufen liegen während des Fördervorganges auf Rollen des Rollenbahnförderers auf, die auf zwei Spuren und in Förderrichtung hintereinander angeordnet sind. Werden die Rollen in Drehung versetzt, wird der Skid mit der daran befestigten Fahrzeugkarosserie in Förderrichtung gefördert, wobei es ausreicht, nur einen Teil der Rollen mit einem Drehantrieb zu versehen.
   Die Rollenbahnförderer der eingangs genannten Art, wie sie derzeit vom Markt her bekannt sind, besitzen für alle angetriebenen Rollen nur eine einzige gemeinsame Spannungsquelle. Fällt diese aus oder tritt ein sonstiger Fehler im Antriebsstrang auf, bleibt der geförderte Gegenstand stehen und muß ggfs. mit Mühe von Hand abtransportiert werden. Fällt eine einzelne angetriebene Rolle aus, ist über eine erhebliche Strecke, die einem Rollenbahnmodul entspricht, ein Transport nicht mehr möglich, was im allgemeinen ebenfalls zu einer Unterbrechung der Förderung auf dem Rollenbandförderer führt.
   Aufgabe der vorliegenden Erfindung ist es, einen Rollenbahnförderer der eingangs genannten Art so fortzubilden, daß eine höhere Betriebssicherheit gegeben ist.
   Diese Aufgabe wird erfindungsgemäß dadurch gelöst, daß
d) jeder angetriebenen Rolle ein Antriebsmotor zugeordnet ist;
e) eine erste Spannungsquelle vorgesehen ist, aus welcher ein erster Satz der angetriebenen Rollen gespeist wird;
f) mindestens eine zweite Spannungsquelle vorgesehen ist, aus welcher mindestens ein weiterer Satz der angetriebenen Rollen gespeist wird.

Nach dem erfindungsgemäßen Konzept werden somit zwei Maßnahmen getroffen, welche für eine Redundanz im Antriebssystem der angetriebenen Rollen sorgt und so Ausfallsicherheit schafft: Zum einen wird die Anzahl der angetriebenen Rollen verglichen mit dem Stande der Technik erheblich vergrößert, so daß beim Ausfall einer einzelnen angetriebenen Rolle keine größere Strecke des Rollenbahnförderers ohne Antrieb bleibt, sondern benachbarte Rollen die Funktion der ausgefallenen angetriebenen Rolle im wesentlichen mit übernehmen können.

Zum zweiten wird die Spannungsquelle mindestens doppelt vorgehalten, so daß bei einem elektrischen Fehler im einen Antriebsstrang, der den Ausfall eines Satzes von angetriebenen Rollen zur Folge hat, der andere Antriebsstrang funktionsfähig bleibt und die in diesem Antriebsstrang befindlichen angetriebenen Rollen zumindest eine Not-Förderfunktion aufrecht erhalten können. In einem solchen Falle des Notbetriebes können zwar, da die Zahl der angetriebenen Rollen reduziert ist, nicht dieselben Beschleunigungen und Geschwindigkeiten erreicht werden wie im störungsfreien Betrieb. Die Leistung der verbleibenden, funktionsfähigen angetriebenen Rollen reicht jedoch aus, um zumindest den Rollenbahnförderer problemlos räumen zu können oder aber auch über eine gewisse Zeit in Funktion, wenn auch mit geringerer Förderkapazität, zu halten.

Im allgemeinen reicht es aus, daß zwei Spannungsquellen vorgesehen sind. Es wird nur in äußerst seltenen Fällen vorkommen, daß beide Spannungsquellen gleichzeitig gestört sind.

Bei Verwendung zweier Spannungsquellen kann die Anordnung so getroffen werden, daß eine Spannungsquelle alle angetriebenen Rollen der einen Spur und die andere Spannungsquelle alle angetriebenen Rollen der anderen Spur speist. Diese Anordnung ist verkabelungstechnisch besonders einfach zu realisieren. Sie hat allerdings den Nachteil, daß die auf dem Rollenbahnförderer sich bewegenden Transportgestelle (Skids) nur an einer Seite angetrieben werden.

Daher ist es grundsätzlich auch möglich, daß aus unterschiedlichen Spannungsquellen gespeiste Rollen auf derselben Spur angeodnet sind. Fällt ein Satz von Antriebsrollen aus, so bleiben gleichwohl auf beiden Spuren angetriebene Rollen erhalten, wenngleich sich deren Abstand voneinander vergrößert. Diese Variante des erfindungsgemäßen Rollenbahnförderers erfordert jedoch einen etwas größeren Verkabelungsaufwand.

Die Antriebsmotoren sind zweckmäßigerweise Niederspannungsmotoren, insbesondere Gleichstrom-Niederspannungsmotoren, da in diesem Falle die Sicherheitsanforderungen geringer und die Halbleiter-Bauelemente preiswerter sind.

Aus Platz- und Montagegründen empfiehlt es sich, daß die Antriebsmotoren Nabenmotoren sind, die mit den angetriebenen Rollen eine Baueinheit bilden.

Ausführungsbeispiele der Erfindung werden nachstehend anhand der Zeichnung näher erläutert; es zeigen
- Figur 1: perspektivisch eine Rollenleiste, die Teil eines Rollenbahnförderers ist;
- Figur 2: in schematischer Draufsicht und teilweise mit elektrischer Verkabelung ein erstes Ausführungsbeispiel eines Rollenbahnförderers;
- Figur 3: in einer Draufsicht ähnlich der Figur 2 ein zweites Ausführungsbeispiel eines Rollenbahnförderers.

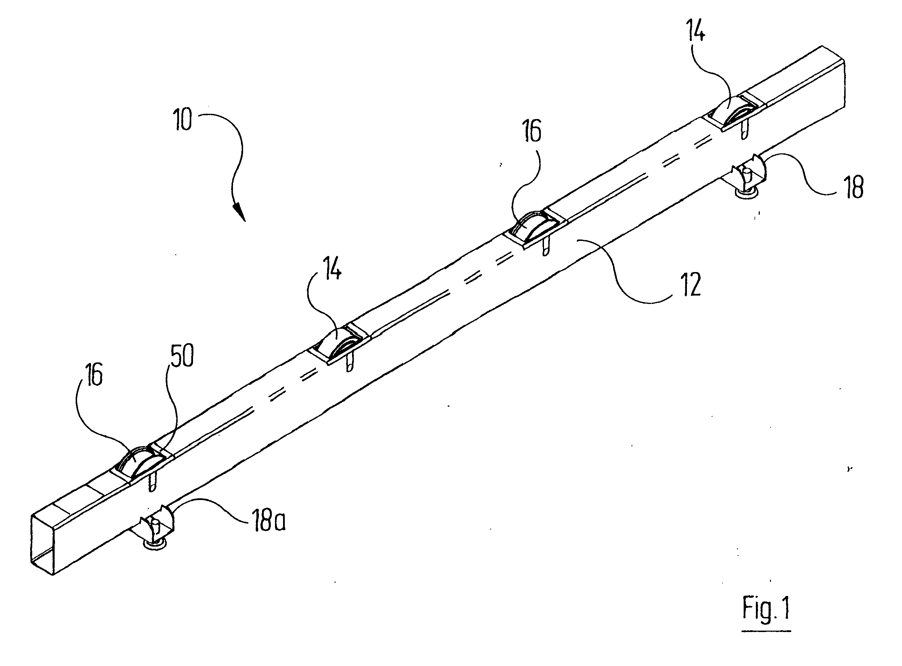

Zunächst wird auf Figur 1 Bezug genommen, in welcher eine insgesamt mit dem Bezugszeichen 10 bezeichnete Rollenleiste perspektivisch dargestellt ist. Die Rollenleiste 10 weist einen Längsträger 12 auf, der als Hohlprofil mit rechteckigem Querschnitt ausgebildet ist. In dem Längsträger 12 sind zwei angetriebene Rollen 14 und zwei nicht angetriebene Rollen 16 abwechselnd entlang der Längsrichtung angeordnet. Die angetriebenen Rollen 14 sind unprofiliert und tragen eine Beschichtung mit hoher Reibwirkung. Die nicht angetriebenen Rollen 16 haben ein Profil mit beiderseitigen Spurkränzen. Die Spurkränze bewirken eine Seitenführung der Kufen der zu transportierenden Skids.

Jeder der angetriebenen Rollen 14 ist ein eigener elektrischer Nabenantriebsmotor zugeordnet, der mit den Rollen 14 jeweils ein kompaktes Antriebsmodul bildet und selbst in der Zeichnung nicht erkennbar ist.

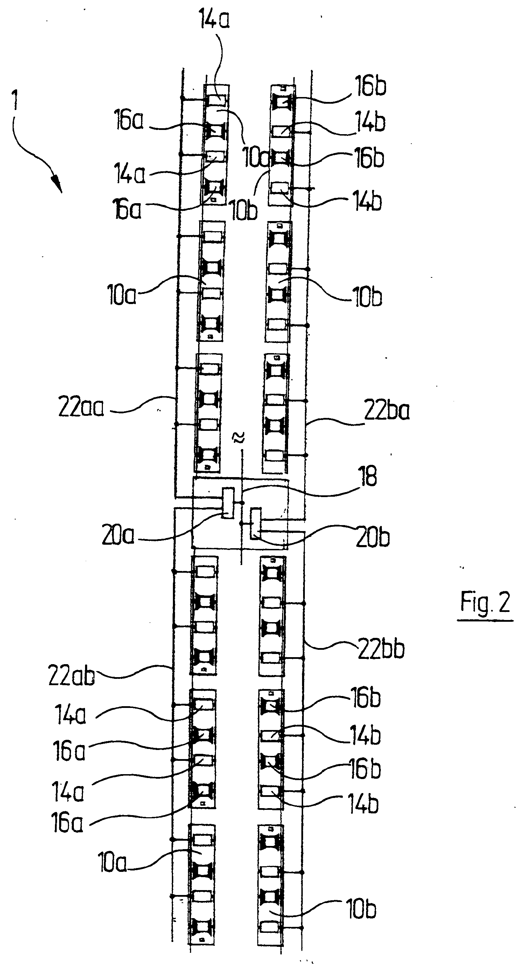

Ein Rollenbahnförderer 1 wird, wie der Figur 2 zu entnehmen ist, aus einer Vielzahl von Rollenleisten 10 der in Figur 1 dargestellten Art aufgebaut, indem diese Rollenleisten 10 in zwei parallelen Reihen oder "Spuren" angeordnet werden. Der Abstand zwischen den beiden Spuren von Rollenleisten 10 entspricht dem Abstand der Kufen der Skids, die auf dem Rollenbahnförderer 1 befördert werden sollen.

Die angetriebenen Rollen 14 der verschiedenen Rollenleisten 10 werden in folgender Weise mit elektrischer Energie versorgt:

Eine Leitung, auf welcher die am Aufstellungsort des Rollenbahnförderers vorhandene Netzspannung liegt, ist in Figur 2 mit dem Bezugszeichen 18 versehen. Zwei Gleichspannungs-Versorgungseinrichtungen 20a, 20b sind mit der Versorgungsleitung 18 verbunden und erzeugen an jeweils zwei Ausgängen eine Nieder-Gleichspannung von beispielsweise 24 Volt. Die eine dieser Gleichspannungs-Versorgungseinrichtungen 20a versorgt alle angetriebenen Rollen 14a in der einen der beiden Spuren des Rollenbahnförderers 1, während die andere der beiden Gleichspannungs-Versorgungseinrichtungen 20b die angetriebenen Rollen 14b der zweiten Spur speisen.

Der eine Ausgang der Gleichspannungs-Versorgung 20a ist über eine Leitung 22aa mit allen angetriebenen Rollen 14a verbunden, die sich, von den Gleichspannungs-Versorgungseinrichtungen 20a, 20b aus gesehen, auf einer Seite von diesen befinden, während der zweite Ausgang der Gleichspannungs-Versorgungseinrichtung 20a über eine Leitung 22ab mit allen angetriebenen Rollen 14a verbunden ist, die sich auf der gegenüberliegenden Seite der Gleichspannungs-Versorgungseinrichtungen 20a, 20b befinden.

In entsprechender Weise ist einer der beiden Ausgänge der Gleichspannungs-Versorgungseinrichtung 20b über eine Leitung 22ba mit allen angetriebenen Rollen 14b der zweiten Spur des Rollenbahnförderers 1 verbunden, die sich, gesehen von den Gleichspannungs-Versorgungseinrichtungen 20a, 20b, auf einer Seite von diesen befinden, während der zweite Ausgang der Gleichspannungs-Versorgungseinrichtung 20b über eine Leitung 22bb alle angetriebenen Rollen 14b der in Figur 2 rechten Spur speist, die sich auf der gegenüberliegenden Seite der Gleichspannungs-Versorgungseinrichtungen 20a, 20b befinden.

Die Verwendung von mit Niederspannung betriebenen Naben-Antriebsmotoren bringt eine ganze Reihe von Vorteilen mit sich:

Im Vordergrund steht dabei die Tatsache, daß die Sicherheitsanforderungen in diesem Falle erheblich niedriger sind, als dies bei einer mit voller Netzspannung arbeitenden Antriebstechnik der Fall wäre. Auf diese Weise ergeben sich Einsparungen bei der Installationstechnik. Auch die Halbleiterbauteile, die in den Gleichspannungs-Versorgungseinrichtungen 20a, 20b und in den Steuerungskomponenten der angeriebenen Rollen 14 zur Anwendung kommen, sind erheblich preisgünstiger. Die Leiterbahnen auf den Leiterplatten brauchen zur Vermeidung von Spannungsüberschlägen keine so großen Sicherheitsabstände von einander einzuhalten, so daß die Leiterplatten selbst kleiner werden und ohne weiteres z. B. in ein kompaktes Antriebsmodul mit angetriebener Rolle 14 und entsprechenden Steuerungskomponenten integriert werden können. Die angetriebenen Rollen 14 können in einem Bremsbetrieb als Generatoren verwendet werden, so daß elektrische Energie eingespart werden kann. Schließlich entstehen in Niederspannungs-Schaltungskomponenten auch geringere Verluste, so daß erneut ein Energiespareffekt auftritt und nur kleine Kühlflächen benötigt werden.

Da die Gleichspannungs-Versorgungseinrichtungen 20a, 20b doppelt vorhanden sind, besitzt der Rollenbahnförderer 1 eine "Notlaufeigenschaft" für den Fall, daß in einem der beiden Antriebsstränge, die von den Gleichspannungs-Versorgungseinrichtungen 20a, 20b gespeist werden, ein Fehler auftritt. Der jeweils intakte "Antriebsstrang" kann dann für eine gewisse Zeit die volle Antriebsfunktion übernehmen, wobei allenfalls in der Beschleunigung und in der Geschwindigkeit gewisse Abstriche in Kauf genommen werden müssen.

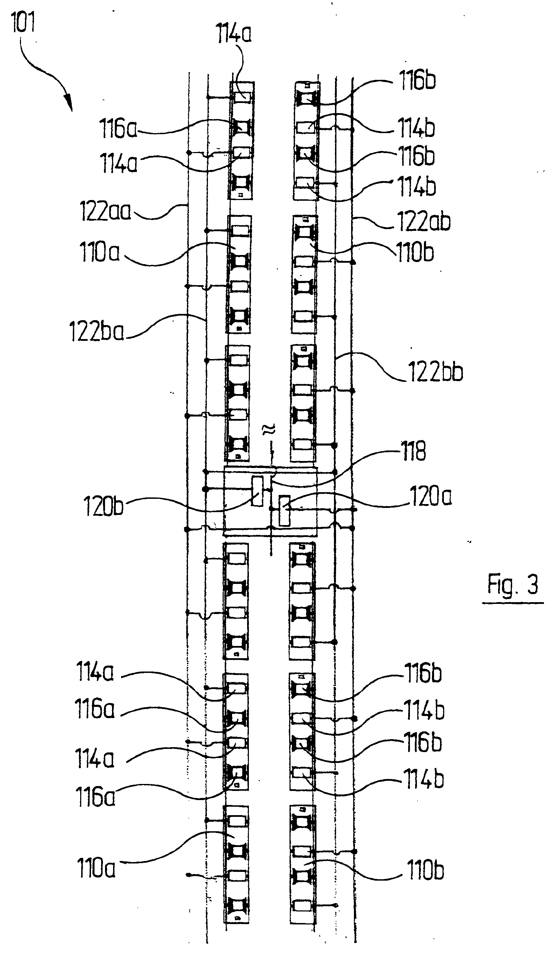

Das in Figur 3 dargestelle Ausführungsbeispiel eines Rollenbahnförderers 101 ähnelt demjenigen, das oben anhand der Figur 2 erläutert wurde, sehr. Entsprechende Teile sind daher mit denselben Bezugszeichen zuzüglich 100 gekennzeichnet.

Auch der Rollenbahnförder 101 der Figur 3 ist aus einer Vielzahl von Rollenleisten 110 aufgebaut, wie sie in Figur 1 dargestellt sind. Insoweit unterscheidet sich der mechanische Aufbau des Ausführungsbeispiels der Figur 3 nicht von demjenigen der Figur 2. Allerdings werden die verschiedenen angetriebenen Rollen 114a, 114b in den beiden Spuren des Rollenbahnförderers 101 anders gespeist.

Wie der Figur 3 zu entnehmen ist, erstrecken sich entlang beider Spuren des Rollenbahnförderers 101 der Figur 3 jeweils zwei niedrige Gleichspannung führende Leitungen 122aa und 122ba bzw. 122ab und 122bb. Die Versorgungsleitungen 122aa und 122ab sind beide mit einer der beiden Gleichspannungs-Versorgungseinrichtungen 220a verbunden, während die beiden Versorgungsleitungen 122ba und 122bb mit der zweiten Gleichspannungs-Versorgungseinrichtung 120b in Verbindung stehen.

Wie Figur 3 zeigt, sind alle angetriebenen Rollen 114a der linken Spur des Rollenbahnförderers 101 abwechselnd einmal mit der Versorgungsleitung 122aa und das andere Mal mit der Versorgungsleitung 122ba verbunden. Dies hat zur Folge, daß in jeder der Rollenleisten 110 sich jeweils eine angetriebene Rolle 114 befindet, die aus der einen Gleichspannungs-Versorgungseinrichtung 120a gespeist wird, und eine angetriebene Rolle 114, die aus der anderen Gleichspannungs-Versorgungseinrichtung 120b gespeist wird.

Ähnlich liegen die Verhältnisse in der in Figur 3 rechten Spur des Rollenbahnförderers 101. Auch hier sind die angetriebenen Rollen 114 abwechselnd mit der Leitung 122ab und der Leitung 122bb, letztendlich also abwechselnd der Gleichspannungs-Versorgungseinrichtung 120a und der Gleichspannungs-Versorgungseinrichtung 120b verbunden.

Fällt bei der Ausführungsform des Rollenbahnförderers 101 in Figur 3 einer der elektrischen "Antriebsstränge", beispielsweise eine der beiden Gleichspannungs-Versorgungseinrichtungen 120a, 120b aus, so ist, ähnlich wie beim Ausführungsbeispiel der Figur 2, ein Notbetrieb des Rollenbahnförderers 101 möglich. Während jedoch beim Ausführungsbeispiel der Figur 2 dann ausschließlich in einer Spur des Rollenbahnförderers 1 Antriebskräfte vorliegen, finden sich beim Ausführungsbeispiel der Figur 3 auch bei Ausfall eines "Antriebsstranges" in beiden Spuren noch angetriebene Rollen 114. Dies begünstigt den Geradauslauf der Skids im Notbetrieb.

Die Ansteuerung der verschiedenen angetriebenen Rollen 2 erfolgt über ein industrieübliches Bussystem.

## Patentansprüche

1. Rollenbahnförderer mit
a) einer Vielzahl von in zwei parallelen Spuren angeordneten angetriebenen Rollen;
b) einer Vielzahl von Antriebsmotoren zum Antreiben der Rollen;
c) mindestens einer Spannungsquelle, aus welcher die Antriebsmotoren gespeist werden,
**dadurch gekennzeichnet, daß**
d) jeder angetriebenen Rolle (14; 114) ein Antriebsmotor zugeordnet ist;
e) eine erste Spannungsquelle (20a; 120a) vorgesehen ist, aus welcher ein erster Satz der angetriebenen Rollen (14; 114) gespeist wird;
f) mindestens eine weitere Spannungsquelle (20b; 120b) vorgesehen ist, aus welcher mindestens ein weiterer Satz der angetriebenen Rollen (14; 114) gespeist wird.

2. Rollenbahnförderer nach Anspruch 1, **dadurch gekennzeichnet, daß** zwei Spannungsquellen (20a, 20b; 120a, 120b) vorgesehen sind.

3. Rollenbahnförderer nach Anspruch 2, **dadurch gekennzeichnet, daß** eine Spannungsquelle (20a) alle angetriebenen Rollen (14a) der einen Spur und die andere Spannungsquelle (20b) alle angetriebenen Rollen (14b) der anderen Spur speist.

4. Rollenbahnförderer nach Anspruch 1 oder 2, **dadurch gekennzeichnet, daß** aus unterschiedlichen Spannungsquellen (120a, 120b) gespeiste angetriebene Rollen (114) auf derselben Spur angeordnet sind.

5. Rollenbahnförderer nach einem der vorhergehenden Ansprüche, **dadurch gekennzeichnet, daß** die Antriebsmotoren Niederspannungsmotoren, insbesondere Gleichstrom-Niederspannungsmotoren, sind.

6. Rollenbahnförderer nach einem der vorhergehenden Ansprüche, **dadurch gekennzeichnet, daß** die Antriebsmotoren Nabenmotoren sind, die mit den angetriebenen Rollen (14; 114) eine Baueinheit bilden.
